(19) Europäisches Patentamt
European Patent Office
Office européen des brevets

(11) EP 4 632 453 A1

(12) EUROPEAN PATENT APPLICATION
published in accordance with Art. 153(4) EPC

(43) Date of publication:
15.10.2025 Bulletin 2025/42

(51) International Patent Classification (IPC):
G02B 6/36 (2006.01)    B08B 1/00 (2024.01)

(21) Application number: 23900275.1

(52) Cooperative Patent Classification (CPC):
B08B 1/00; G02B 6/36

(22) Date of filing: 14.09.2023

(86) International application number:
PCT/JP2023/033541

(87) International publication number:
WO 2024/122149 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.12.2022 JP 2022194259

(71) Applicant: Fujikura Ltd.
Tokyo 135-8512 (JP)

(72) Inventors:
• SAKAGUCHI, Yuya
Sakura-shi, Chiba 285-8550 (JP)
• FUJITA, Shunsuke
Tokyo 135-8512 (JP)

(74) Representative: Ter Meer Steinmeister & Partner
Patentanwälte mbB
Artur-Ladebeck-Strasse 51
33617 Bielefeld (DE)

(54) OPTICAL CONNECTOR CLEANING IMPLEMENT

(57) An optical connector cleaning tool 1 that includes a cleaning element 2 cleaning a connection end surface 311 of an optical connector300 includes a guide cap 200 that includes a through hole 201 having openings 202 and 203, a cleaning head 110 that comprises a pressing surface 121 pressing the cleaning element 2 against the connection end surface 121 and that is inserted into the through hole 201 through the opening 202, and a jig 250 to which the optical connector 300 is detachably attached and that is inserted into the through hole 201 through the opening 203.

Fig. 2

**Description**

[TECHNICAL FIELD]

The present invention relates to an optical connector cleaning tool that cleans a connection end surface of an optical connector.

For designated countries that are permitted to be incorporated by reference in the literature, the contents of Japanese Patent Application No. 2022-194259 filed with Japan Patent Office on December 5, 2022 is incorporated herein by reference and is regarded as a part of the description of this specification.

[BACKGROUND ART]

An optical connector cleaning tool including a cylindrical cap is known for cleaning the connection end surface of a stand-alone optical connector plug that is not connected to a device (refer to, for example, Patent Document 1). In this optical connector cleaning tool, a pressing member holding a cleaning cloth is inserted into one opening of the cap, a stand-alone optical connector plug is inserted into the other opening of the cap, and the cleaning cloth is pressed against the connection end surface of the optical connector plug by the pressing member to clean the connection end surface of the optical connector plug.

[CITATION LIST]

[PATENT DOCUMENT]

PATENT DOCUMENT 1: WO 2014/141405

[SUMMARY OF THE INVENTION]

[PROBLEMS TO SOLVED BY INVENTION]

In the above-mentioned optical connector cleaning tool, the cleaning cloth is pressed against the connection end surface by a pressing member while the operator holds the optical connector plug inserted into the cap with fingers. Therefore, depending on how the operator holds the optical connector plug, the cleaning cloth may not be appropriately pressed against the connection end surface, and the cleaning quality may depend on how the operator holds the optical connector plug.

An object of the present invention is to provide an optical connector cleaning tool that is capable of stabilizing cleaning quality.

[MEANS FOR SOLVING PROBLEM]

[1] An aspect 1 of the present invention is an optical connector cleaning tool that comprises a cleaning element cleaning a connection end surface of an optical connector, the optical connector cleaning tool comprising: a guide cap that comprises a through hole having a first opening and a second opening; a cleaning head that comprises a pressing surface pressing the cleaning element against the connection end surface and that is inserted into the through hole through the first opening; and a jig to which the optical connector is detachably attached and that is inserted into the through hole through the second opening.

[2] An aspect 2 of the present invention may be the optical connector cleaning tool of the aspect 1, wherein the optical connector cleaning tool may comprise: a cleaning shaft that comprises the cleaning head; and a tubular member that accommodates the cleaning shaft so that the cleaning head protrudes, wherein the cleaning shaft may comprise: a support member that movably supports the cleaning head; and a biasing member that is interposed between the cleaning head and the support member and that biases the cleaning head away from the support member, the jig may have a second contact surface that contacts a first contact surface of the guide cap in a first direction that is the axial direction of the guide cap, the tubular member may have a fourth contact surface that contacts a third contact surface in the first direction, and following formulas (1) and (2) may be satisfied.

$$P_{min} \times A/K - C_0 \leqq C_1 \leqq P_{max} \times A/K - C_0 \ \dots \ (1)$$

$$C_1 = L_0 - L_1 \ \dots \ (2)$$

In the formulas (1) and (2), $P_{min}$ is a minimum value of a surface pressure of the cleaning head against the connection end surface, $P_{max}$ is a maximum value of a surface pressure of the cleaning head against the connection end surface, A is an area of a cleaning target portion in the connection end surface, K is a spring constant of the biasing member, $C_0$ is a compression amount of the biasing member in a non-pressing state of the cleaning head, $L_0$ is a sum of a distance from the second contact surface to the connection end surface and a distance from the fourth contact surface to the pressing surface in the non-pressing state of the cleaning head, and $L_1$ is a distance between the first contact surface and the third contact surface in the guide cap.

[3] An aspect 3 of the present invention may be the optical connector cleaning tool of the aspect 2, wherein a following formula (3) may be satisfied.

$$0.6 \ mm \leq C_1 \leq 2.3 \ mm \ \dots \ (3)$$

[4] An aspect 4 of the present invention may be the optical connector cleaning tool of any one of the aspects 1 to 3, wherein the jig may have a fifth contact surface that contacts against the optical connector in a second direction that is the axial direction of the jig, and the fifth contact surface may have a cutout through which an optical fiber protruding from the optical connector passes.

[5] An aspect 5 of the present invention may be the optical connector cleaning tool of the aspect 4, wherein the jig may comprise a groove that accommodates an optical fiber protruding from the optical connector, the groove may communicate with the cutout and may extend along the second direction, and the groove may have a third opening through which the optical fiber is inserted and removed from the groove in a third direction substantially perpendicular to the second direction.

[6] An aspect 6 of the present invention may be the optical connector cleaning tool of the aspect 5, wherein the third opening may have a tapered surface so that the third opening tapers as the third opening approaches a bottom surface of the groove.

[7] An aspect 7 of the present invention may be the optical connector cleaning tool of the aspect 5 or 6, wherein the groove may have a portion having a width narrower than a width of the cutout.

[8] An aspect 8 of the present invention may be the optical connector cleaning tool of any one of the aspects 4 to 7, wherein the jig may comprise: an accommodating part that is concave and that accommodates the optical connector; and a tapered part that may be disposed in the accommodating part and that guides and positions the optical connector in the accommodating part, and a bottom surface of the accommodating part may be the fifth contact surface.

[9] An aspect 9 of the present invention may be the optical connector cleaning tool of any one of the aspects 4 to 8, wherein the jig may comprise: an accommodating part that is concave and that accommodates the optical connector; and a first convex part that protrudes from a sidewall of the accommodating part and that is inserted into a first recess part of the optical connector, and a bottom surface of the accommodating part may be the fifth contact surface.

[10] An aspect 10 of the present invention may be the optical connector cleaning tool of any one of the aspects 4 to 9, wherein the jig may comprise: an accommodating part that is concave and that accommodates the optical connector; and a second convex part that is disposed in the accommodating part and that is inserted into a second recess part of the optical connector, a bottom surface of the accommodating part may be the fifth contact surface, and no recess part into which the second convex part is inserted may be formed at a position point-symmetrical to the second recess part in the optical connector.

[11] An aspect 11 of the present invention may be the optical connector cleaning tool of any one of the aspects 1 to 10, wherein the optical connector cleaning tool may comprise: a cleaning shaft that comprises the cleaning head and that holds a cleaning element so that the cleaning element is turned back at the pressing surface; a tubular member that accommodates the cleaning shaft so that the cleaning head protrudes; a feeding bobbin that feeds the cleaning element to the pressing surface; a winding bobbin that collects the cleaning element from the pressing surface; a housing from which the cleaning shaft protrudes and that accommodates the feeding bobbin and the winding bobbin; and a driving mechanism that rotates the winding bobbin in accordance with the relative movement of the cleaning shaft with respect to the housing to wind the cleaning element around the winding bobbin, wherein the cleaning shaft may be movable together with the tubular member with respect to the housing.

[EFFECT OF THE INVENTION]

In the present invention, the optical connector cleaning tool includes the jig to which the optical connector is detachably attached, and the jig is inserted into the through hole of the guide cap. Therefore, it is possible to appropriately press against the connection end surface of the optical connector, and it is possible to stabilize the cleaning quality.

[BRIEF DESCRIPTION OF DRAWING(S)]

FIG. 1(a) and FIG. 1(b) are a plan view and a front view showing the optical connector as a cleaning object of the optical connector cleaning tool in the embodiment of the present invention;
FIG. 2 is a perspective view showing the optical connector cleaning tool in the embodiment of the present invention;
Fig. 3 is an exploded perspective view of the cleaning unit in the embodiment of the present invention;
Fig. 4 is an exploded perspective view of the extension member in the embodiment of the present invention;
FIG. 5(a) to FIG. 5(c) are a cross-sectional view, a front view, and a rear view showing the guide cap in the embodiment of the present invention;
FIG. 6(a) to FIG. 6(c) are a perspective view, a front view, and a plan view showing the jig in the embodiment of the present invention;
FIG. 7 is a graph showing the relationship between the appropriate surface pressure and the average number of cleaning operations in the optical connector cleaning tool;
FIG. 8(a) to FIG. 8(c) are diagrams for explaining the cleaning method using the optical connector cleaning tool in the embodiment of the present invention, FIG. 8(a) is a diagram showing the state before the optical connector is attached to the jig, FIG. 8(b) is a diagram showing the state in the middle of attaching the optical connector to the jig, and FIG. 8(c) is a diagram showing the state after the optical connector is attached to the jig;
FIG. 9(a) and FIG. 9(b) are diagrams for explaining the cleaning method using the optical connector cleaning tool in the embodiment of the present invention, FIG. 9(a) is a diagram showing the state in which the jig to which the optical connector is attached is inserted into the guide cap, and FIG. 9(b) is a diagram showing the state in which the cleaning head presses the cleaning element against the optical connector; and
FIG. 10(a) and FIG. 10(b) are diagrams for explaining the cleaning method using the optical connector cleaning tool in the embodiment of the present invention, FIG. 10(a) is a view showing a state in which the tool main body is moved toward the extension member, and FIG. 10(b) is a view showing a state in which the tool main body is moved backward from the extension member.

[MODE(S) FOR CARRYING OUT THE INVENTION]

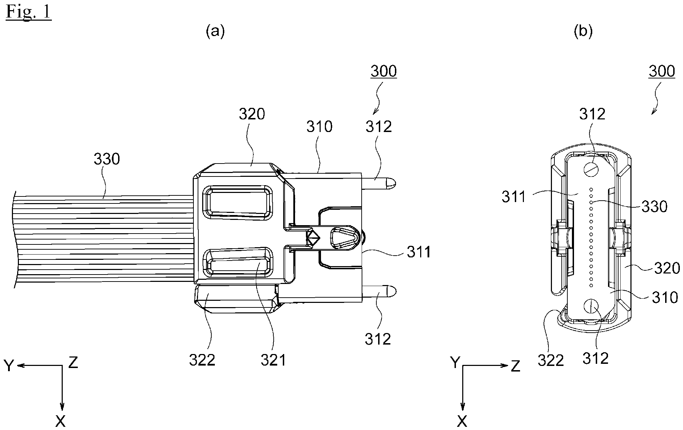

Hereinafter, an embodiment of the invention will be described with reference to the drawings.
The optical connector cleaning tool 1 in the present embodiment is a cleaner that cleans a connection end surface of an optical connector that connects optical fibers. FIG. 1(a) and FIG. 1(b) are a plan view and a front view showing the optical connector 300 as a cleaning object of the optical connector cleaning tool 1 in the present embodiment.
Although not particularly limited, the optical connector 300 that is a cleaning object of the optical connector cleaning tool 1 is, for example, a multi-fiber collective connection type optical connector plug that simultaneously connects multiple optical fibers.
Specifically, as shown in FIG. 1(a) and FIG. 1(b), the optical connector 300 includes a ferrule 310 having a flat cross-sectional shape (end surface shape). The ferrule 310 is a so-called MT (Mechanical Transferable) ferrule and has multiple (for example, 16 (sixteen)) fiber holding holes arranged along the cross-sectional longitudinal direction of the ferrule 310. The optical fiber 320 is inserted in each of the fiber holding holes, and the optical fiber 320 is fixed to the ferrule 310 by an adhesive. The optical fibers 320 are exposed from the end surface 311 of the ferrule 310.
In the present embodiment, the end surface 311 of the ferrule 310 is an obliquely polished end surface (APC) that has an inclination. Although not particularly limited, the end surface 311 has an inclination angle of, for example, 8 degrees with respect to a direction perpendicular to the optical axis of the optical fiber 320. The end surface 311 of the ferrule 310 may be a flat polished end surface (UPC) that is not inclined.
The number of the optical fibers 320 held in the ferrule 310 is not particularly limited and may be, for example, more or less than sixteen (16). The optical fibers 320 may be arranged in multiple rows (for example, two (2) rows) along the cross-sectional longitudinal direction of the ferrule 310. As the ferrule 310 described above, an MT ferrule specified in JIS C 5981 or JIS C 5982 may be used.
The optical connector 300 includes the housing 230 that holds the ferrule 310. The optical fiber 330 held in the ferrule 310 protrudes rearward (the +Y direction in the figure) from the housing 320. The recess parts 321 and 322 are formed in the housing 320. The recess part 321 corresponds to an example of the "first recess part" in the aspect of the present invention, and the recess part 322 corresponds to an example of the "second recess part" in the aspect of the present invention.

The recess part 321 is for preventing the optical connector 300 from falling off from the jig 250 (described later) of the optical connector cleaning tool 1. The recess part 321 is formed in the side surface of the housing 320.

On the other hand, the recess part 322 is for preventing erroneous attachment of the optical connector 300 to the guide cap 200 (described later). The recess part 322 is formed in the side surface of the housing 320 so that the recess part 322 penetrates the housing 320 in the axial direction (Y-axis direction in the figure) of the optical connector 300.

Here, the pressing part 120 (described later) of the cleaning head 110 of the optical connector cleaning tool 1 is pulled by the tension applied to the cleaning element 2 when the cleaning element 2 is collected. Therefore, when the end surface 311 of the ferrule 310 of the optical connector 300 is inclined, the inclination direction of the pressing surface 121 may be opposite to the inclination direction of the end surface 311, and the end surface 311 of the optical connector 300 may not be appropriately cleaned.

On the other hand, in the present embodiment, since the insertable orientation of the optical connector 300 into the guide cap 200 is limited to a specific orientation by the recess part 322, it is possible to align the incline direction of the end surface 311 of the ferrule 310 of the optical connector 300 with the inclination direction of the pressing surface 121 of the cleaning head 110. Therefore, as shown in FIG. 1(b), when the optical connector 300 is viewed from the front, no recess part into which the convex part 266 of the jig 250 can be inserted is not formed at a position symmetrical to the recess part 322 in the housing 320 around the central axis of the optical connector 300.

When the pair of optical connectors 300 are connected, one optical connectors 300 is inserted into one insertion opening of a tubular adapter (not shown), and the other connector 300 is inserted into the other insertion opening of the adaptor. The optical fibers 320 exposed from the end surfaces 311 of the ferrules 310 are optically connected to each other by abutting the end surfaces 311 of the ferrules 310 of the pair of optical connectors 300. At this time, the optical connectors 300 are positioned with high accuracy by inserting the guide pins 312 of the one ferrule 310 into the guide holes (not shown) of the other ferrule 310.

If a contaminant such as dirt, dust, and oil is adhered to the end surface 311 of the ferrule 310 at the time of abutting, it may cause damage at the time of attaching and detaching, an increase in transmission loss, and the like. Therefore, it is necessary to clean the end surface 311 of the ferrule 310 using the optical connector cleaning tool 1 described below before the optical connectors 300 are connected.

Hereinafter, the configuration of the optical connector cleaning tool 1 in the present embodiment will be described in detail with reference to the drawings. The optical connector cleaning tool 1 described below has basically the same configuration as the optical connector cleaning tool disclosed in JP 2014-35489 A, JP 2014-35490 A and JP 2014-35491 A except that the optical connector cleaning tool 1 includes the guide cap 200 and the jig250.

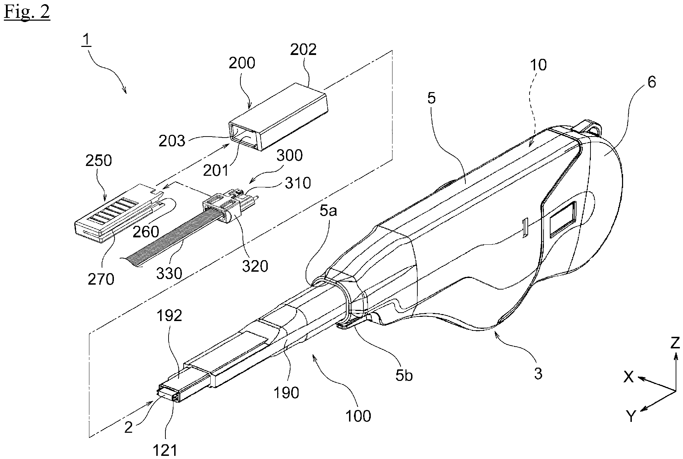

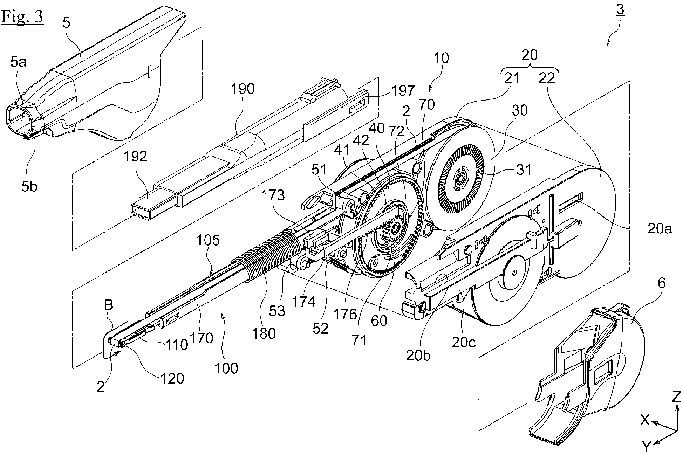

First, the overall configuration of the optical connector cleaning tool 1 in the present embodiment will be described with reference to FIG. 2 and FIG. 3. FIG. 2 is a perspective view showing the optical connector cleaning tool 1 in the present embodiment, and Fig. 3 is an exploded perspective view of the cleaning unit 3 in the present embodiment.

As shown in FIG. 2 and FIG. 3, the optical connector cleaning tool 1 (hereinafter, also simply referred to as "cleaning tool 1") in the present embodiment includes a cleaning unit 3, a guide cap 200, and a jig 250. The cleaning unit 3 includes a tool main body 10 and an extension member 100 extending from the tool main body 10. The tool main body 10 is covered with the front cover 5 and the rear cover 6. The extension member 100 protrudes forward (the +Y direction in the figure) from the opening 5a of the front cover 5. The front end portion of the extension member 100 is inserted into the guide cap 200. The jig 250 is inserted into the guide cap 200 while the jig 250 holds the optical connector 300 described above.

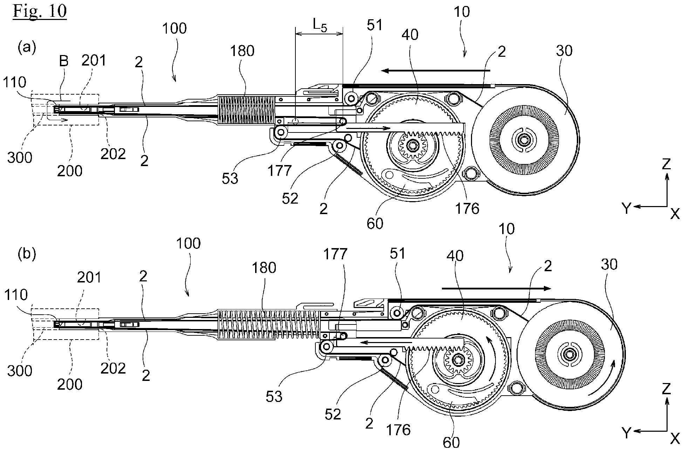

The extension member 100 has the pressing surface 121 (described later) that presses the cleaning element 2 against the connection end surface 311 (the above-mentioned end surface 311 of the ferrule 310) of the optical connector 300 at the front end. When the jig 250 is inserted into the guide cap 200 , the pressing surface 121 presses the cleaning element 2 against the connection end surface 311 of the optical connector 300. The extension member 100 can relatively move with respect to the tool main body 10 in the axial direction (the Y-axis direction in the figure) of the extension member 100 (see FIG. 10(a) and FIG. 10(b)). The tool main body 10 includes the bobbins 30 and 40 (described later) for supplying and collecting the cleaning element 2 to and from the pressing surface 121.

Since the cleaning element 2 moves on the pressing surface 121 in accordance with the relative movement between the tool main body 10 and the extension member 100 (the forward movement of the tool main body 10 with respect to the extension member 100), the cleaning element 2 slides while being pressed against the connection end surface 311 of the optical connector 300. Therefore, the cleaning element 2 wipes off the contaminant adhering to the connection end surface 311, and the end surface 311 of the ferrule 310 of the optical connector 300 is cleaned. However, when the cleaning element has adhesiveness, it may be configured to only press the cleaning element against the connection end surface 311 without sliding the cleaning element. Further, it is possible to collect the used cleaning element 2 from the pressing surface 121 to the winding bobbin 40 and supply the unused cleaning element 2 from the feeding bobbin 30 to the pressing surface 121 in accordance with the relative movement (the backward movement of the tool main body 10 with respect to the extension member 100).

As described above, the optical connector 300 as the cleaning object in the present embodiment is a multi-fiber collective connection type optical connector, and the end surface 311 of the ferrule 310 of the optical connector 300 has a flat shape. Therefore, the cleaning element 2 is an elongate belt-shaped continuous body (tape). The width of the cleaning element 2 is wide enough to wipe the end surfaces of all the optical fibers 330 exposed on the end surface 311 of the ferrule 310 and the periphery thereof (for example, the region between the guide pins 312) at once. Although not particularly limited, as an example of such a tape-shaped cleaning element 2, a woven fabric made of ultra fine fibers made of polyester, nylon, or the like can be exemplified.

The optical connector cleaning tool 1 may be used to clean the optical connector 300 inserted into the adapter, or it may be used to clean an optical connector receptacle used in a plug-receptacle coupling system. **In** these cases, the front end of the extension member 100 is inserted into the adapter or the like without using the guide cap 200 and jig 250. At this time, the guide cap 200 can be attached to the protrusion 5b of the front cover 5 for preventing the guide cap 200 from being lost. The optical connector receptacle includes the ferrule attached to the ends of the optical fibers and incorporated into the housing into which the optical connector plug is inserted.

Next, the configuration of the tool main body 10 of the cleaning tool 1 in the present embodiment will be described in detail with reference to FIG. 3.

As shown in FIG. 3, the tool main body 10 includes the housing 20, the feeding bobbin 30, the winding bobbin 40, the guide cylinders 51 and 52, the roll 53, the ratchet pawls 60, and the transmission members 70.

The housing 20 includes the first housing 21 and the second housing 22. The feeding bobbin 30, the winding bobbin 40, the guide cylinders 51 and 52, the roll 53, the ratchet pawls 60, and the transmission members 70 are accommodated in the housing 20. Although not particularly limited, the first and second housings 21 and 22 are made of a resin material. The first housing 21 and the second housing 22 are fixed to each other by fitting the fixing pins formed in the second housing 22 to the fixing cylinders formed in the first housing 21.

The feeding bobbin 30 is a reel (cylindrical winding frame) for supplying the cleaning element 2. The unused cleaning element 2 is wound around the feeding bobbin 30. The feeding bobbin 30 is rotatably supported by the support shaft part formed in the first housing 21. As the feeding bobbin 30 rotates in accordance with the above-mentioned backward movement of the tool main body 10 with respect to the extension member 100, the unused cleaning element 2 is fed from the feeding bobbin 30 to the pressing surface 121.

The engagement grooves 31 arranged circumferentially are formed on both side surfaces of the feeding bobbin 30. The engagement pawls 20a whose tips that abut against the engagement groove 31 is formed in the first and second housings 21 and 22. The idling rotation of the feeding bobbin 30 is suppressed by the engagement pawls 20a.

The winding bobbin 40 is a reel for winding the used cleaning element 2. The winding bobbin 40 is rotatably supported by the support shaft part formed in the first housing 21. As the winding bobbin 40 rotates in accordance with the above-mentioned backward movement of the tool main body 10 with respect to the extension member 100, the used cleaning element 2 used on the pressing surface 121 is wound around the winding bobbin 40.

The outer ring portion 41 and the inner ring portion 42 are formed on both side surfaces of the winding bobbin 40. The ratchet gear engaged with the ratchet pawl 60 is formed on the inner peripheral surface of the outer ring portion 41. On the other hand, the inner peripheral surface of the inner ring portion 42 functions as a friction surface that the leaf spring portion 72 of the transmission member 70 contacts.

The ratchet pawls 60 are disposed on both side surfaces of the winding bobbin 40 so as to be interposed between the outer ring portion 41 and the inner ring portion 42. The ratchet pawls 60 are rotatably supported by the support shaft parts of the housings 21 and 22. The ratchet pawl 60 constitutes a ratchet mechanism together with the ratchet gear of the outer ring portion 41. The ratchet mechanism allows the winding bobbin 40 to rotate in a direction (winding direction) in which the cleaning element 2 is wound but prohibits the winding bobbin 40 from rotating in a direction opposite to the winding direction.

The transmission members 70 are disposed inside both of the inner ring portions 42 of the winding bobbin 40. Each of the transmission members 70 is rotatably supported by the above- mentioned support shaft part of the first housing 21 that supports the winding bobbin.

Each of the transmission members 70 includes a pinion gear 71 and a pair of leaf spring portions 72. The pinion gear 71 is engaged with the rack gear 176 (described later) of the extension member 100. The pinion gear 71 and the rack gear 176 constitute a rack and pinion mechanism. The rack and pinion mechanism converts the above- mentioned relative linear motion of the extension member 100 with respect to the tool main body 10 into a rotational motion.

The pair of leaf spring portions 72 is fitted inside the inner ring portion 42 of the winding bobbin 40 in a state in which the leaf spring portions 72 is elastically deformed inward. Therefore, a frictional force acts between each the leaf spring portions 72 and the friction surface of the inner ring portion 42, and the leaf spring portion 72 and the inner ring portion 42 constitute a friction transmission mechanism. The rotational motion converted by the rack and pinion mechanism is transmitted to the winding bobbin 40 via the friction transmission mechanism.

The guide cylinder 51 is rotatably supported by the support shaft part formed in the first housing 21. The guide cylinder 52 is also rotatably supported by another support shaft part formed in the first housing 21. The roll 53 is rotatably supported by the pin held by the first and second housings 21 and 22. The unused cleaning element 2 fed from the feeding bobbin 30 is guided toward the pressing surface 121 of the extension member 100 by the guide cylinder 51. On the other hand, the used cleaning element 2 is guided toward the winding bobbin 40 by the guide cylinder 52 and the roll 53. At this time, the cleaning element 2 is turned back by the roll 53, and the cleaning element 2 is hung around the roll 53.

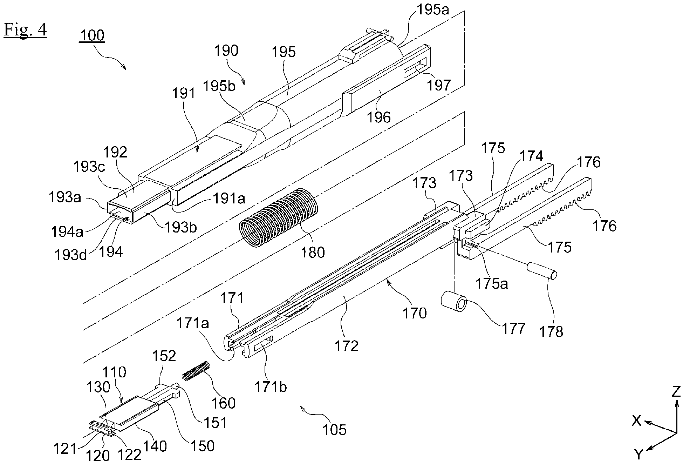

Next, the configuration of the extension member 100 of the cleaning tool 1 in the present embodiment will be described in detail with reference to FIG. 4. Fig. 4 is an exploded perspective view of the extension member 100 in the embodiment of the present invention. The cleaning element 2 is not shown in FIG. 4.

As shown in FIG. 4, the extension member 100 includes the cleaning shaft 105, the first coil spring 180 (coil spring for the guide nozzle), and the guide nozzle 190.

The cleaning shaft 105 is a member (pressing member) for pressing the cleaning element 2 against the connection end surface 311 of the optical connector 300. The cleaning shaft 105 is an elongate member extending along the longitudinal axis direction (the Y-axis direction in the figure) of the extension member 100. The cleaning shaft 105 includes the cleaning head (head member) 110, the second coil spring (coil spring for the head member) 160, and the rack shaft (support member) 170.

The cleaning head 110 is a member that forms the front end portion of the cleaning shaft 105. As shown in FIG. 4, the cleaning head 110 includes the pressing part 120, the neck part (tilting part) 130, the support part 140, and the insertion part 150. Although not particularly limited, for example, the cleaning head 110 is made of a resin material, and the pressing part 120, the neck part 130, the support part 140, and the insertion part 150 are integrally formed.

The pressing part 120 has a pressing surface 121 at its front end for pressing the cleaning element 2 against the connection end surface 311 of the optical connector 300. The pressing surface 121 has a flat shape to correspond to the shape of the end surface 311 of the ferrule 310 of the optical connector 300 as the cleaning object. The cleaning element 2 is wrapped around the pressing surface 121 from the upper side to the lower side of the pressing surface 121. The unused cleaning element 2 is supplied from the upper side of the pressing surface 121, and the used cleaning element 2 is sent out to the lower side of the pressing surface 121 (refer to the arrow B in FIG. 3 and FIG. 10(a)). That is, the cleaning element 2 moves from the upper side to the lower side on the pressing surface 121 along the short axis direction of the pressing surface 121.

A pair of insertion grooves 122 are formed at both ends of the pressing surface 121. When the pressing surface 121 is pressed against the end surface 311 of the ferrule 310, the guide pin 312 protruding from the end surface 311 is inserted into the insertion groove 122, and therefore the pressing surface 121 can bring the cleaning element 2 into close contact with the end surface 311 of the ferrule 310.

The pressing part 120 is connected to the support part 140 via the neck part 130. The neck part 130 is elastically deformable in response to the pressing force from the optical connector 300 to the pressing part 120. The neck part 130 tilts the pressing part 120 in accordance with the inclination of the end surface 311 of the ferrule 310 of the optical connector 300.

The support part 140 has a plate-like shape with a flat cross-sectional shape corresponding to the cross-sectional shape of the pressing part 120. The unused cleaning element 2 supplied from the upper side to the pressing surface 121 of the pressing part 120 passes above the support part 140. On the other hand, the used cleaning element 2 sent out to the lower side from the pressing surface 121 passes below the support part 140.

The insertion part 150 is connected to the rear side of the support part 140. The insertion part 150 is a portion inserted into the front end part 171 of the rack shaft 170 and has a plate-like shape having a width narrower than that of the support part 140. The columnar shaft part 151 protruding rearward (in -Y direction in the figure) and the protrusions 152 protruding laterally (in the X-axis direction in the figure) are formed at a rear end of the insertion part 150.

The second coil spring 160 is interposed between the cleaning head 110 and the rack shaft 170 in a state in which the shaft part 151 of the cleaning head 110 is inserted into the second coil spring 160. The second coil spring 160 is interposed between the cleaning head 110 and the rack shaft 170 in the compressed state. The cleaning head 110 is biased forward with respect to the rack shaft 170 by the second coil spring 160. Therefore, the pressing surface 121 of the cleaning head 110 can press the cleaning element 2 against the connection end surface 211 of the optical connector 200 with an appropriate pressing force. The second coil spring 160 corresponds to an example of the "biasing member" in the aspect of the present invention.

The rack shaft 170 is a member that movably supports the cleaning head 110 in the front-rear direction (the Y-axis direction in the figure). The rack shaft 170 includes the front end part 171, the body part 172, the shoulder parts 173, and the arm parts 175. Although not particularly limited, for example, the rack shaft 170 is made of a resin material, and the front end part 171, the body part 172, the shoulder parts 173, and the arm parts 175 are integrally formed.

The insertion grooves 171a and the windows 171b are formed in the front end part 171 of the rack shaft 170. The insertion grooves 171a are grooves opened to the front end of the rack shaft 170. The insertion part 150 of the cleaning head 110 is movably inserted into the insertion grooves 171a in the front-rear direction (the Y-axis direction in the figure). Further, the windows 171b are open to the side surfaces of the front end part 171 from the insertion grooves 171a. The protrusions 152 of the insertion part 150 of the cleaning head 110 are inserted into the windows 171b. The cleaning head 110 is guided in the front-rear direction by the insertion grooves 171a, and the windows 171b prevent the cleaning head 110 biased by the second coil spring 160 from falling out forward (in the +Y direction in the figure).

The body part 172 is the portion rearward of the front end part 171. The body part 172 has a columnar shape and is an elongate portion extending along the axial direction (the Y-axis direction in the figure) of the extension member 100. Although the rear portion of the body part 172 is disposed within the housing 20 of the tool main body 10, the other portion of the body part 172 extends forward (in the +Y direction in the figure) from the front the housing 20.

The upper surface of the body part 172 functions as a guide surface for guiding the unused cleaning element 2 supplied from the tool body 10 to the cleaning head 110. On the other hand, the lower surface of the body part 172 functions as a guide surface for guiding the used cleaning element 2 collected from the cleaning head 110 to the roll 177. The body part 172 is inserted into the first coil spring 180 and also has a function of supporting the first coil spring 180.

The pair of shoulder parts 173 are connected to the rear end of the body part 172 of the rack shaft 170. The shoulder parts 173 protrude laterally (in the X-axis direction in the figure) from the rear end of the body part 172 and are disposed in the windows 20b (see FIG. 3) of the first and second housings 21 and 22.

Further, the protrusions 174 protruding laterally (in the X-axis direction in the figure) are formed in the shoulder parts 173. **In** a state where the shoulder parts 173 are disposed in the windows 20b of the housings 21 and 22, the protrusions 174 protrude from the windows 20b and are fitted into the windows 197 (described later) of the guide nozzle 190 (refer to FIG. 3).

The pair of arm parts 175 are connected to the lower side of the shoulder parts 173 and extend rearward (the -Y direction in the figure) from the shoulder parts 173. The arm parts 175 are respectively accommodated in the accommodating parts 20c (see FIG. 3) of the first and second housings 21 and 22.

The holding holes 175a are formed in the front end portions of the pair of arm parts 175. The pin 178 is inserted into the holding holes 175a, and a roll 177 is rotatably supported by the pin 178. The used cleaning element 2 guided along the lower surface of the body part 172 is guided toward the winding bobbin 40 by the roll 177 and the above-mentioned guide cylinder 52 and the roll 53 of the tool main body 10. At this time, the cleaning element 2 is turned back by the roll 177, and the cleaning element 2 is hung around the roll 177. As described above, since the cleaning element 2 is also turned back by the roll 53 of the tool main body 10, as a result, the cleaning element 2 is bridged between the rolls 177 and 53.

Further, the rack gear 176 is formed at a rear portion of each of the arm parts 175. The winding bobbin 40 is disposed between the pair of rack gears 176, and the rack and pinion mechanism is configured by engaging the above-mentioned pinion gear 71 of the transmission member 70 with the rack gear 176.

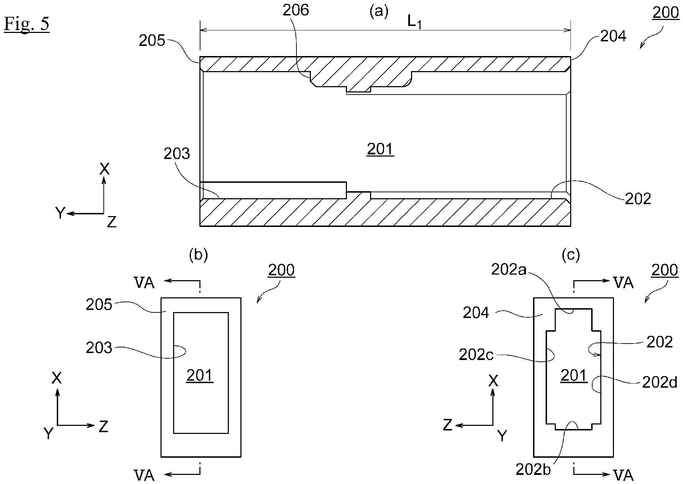

The guide nozzle 190 is a tubular member having the tubular part 191 and the plate parts 196. The tubular part 191 includes the front end part 192 that is inserted into the guide cap 200 when the optical connector 300 is cleaned and the main body part 195 that is connected to the rear side of the front end part 192. The tubular part 191 has a step surface 191a between the front end part 192 and the main body part 195. When the front end part 192 of the guide nozzle 190 is inserted into the guide cap 200, the step surface 191a abuts against one end surface 204 (see FIG. 5(a)) of the guide cap 200. The guide nozzle 190 corresponds to an example of the "tubular member" in the aspect of the present invention, and the step surface 191a corresponds to an example of the "fourth contact surface" in the aspect of the present invention.

The convex parts 193a to 193d are respectively formed on the upper, lower, left, and right outer surfaces of the front end part 192. The protruding amount of the convex part 193a on the left side (the +X direction side in the figure) in FIG. 4 is larger than the protruding amount of the convex part 193b on the right side (the -X direction side in the figure) in FIG. 4.

The tubular part 191 includes the inner hole penetrating in the axial direction (the Y-axis direction in the figure), and the cleaning shaft 105 and the first coil spring 180 are accommodated in the inner hole. The tubular part 191 also has a function of protecting the cleaning element 2 that moves along the upper and lower surfaces of the body part 172 of the rack shaft 170. Although not particularly limited, for example, the guide nozzle 190 is made of a resin material, and the front end part 192, the main body part 195, and the plate parts 196 are integrally formed.

As shown in FIG. 2 and FIG. 3, the support part 140 of the cleaning head 110 is accommodated in the inner hole 194 of the front end part 192 of the tubular part 191. The pressing part 120 of the cleaning head 110 connected to the support part 140 via the neck part 130 protrudes forward (in the +Y direction in the figure) from the opening 194a of the inner hole 194 of the front end part 192 of the tubular part 191.

On the other hand, as shown in FIG. 4, the shoulder parts 173 and the arm parts 175 of the rack shaft 170 protrude rearward (the -Y direction in the figure) from the rear opening 195a of the main body part 195 of the tubular part 191 of the guide nozzle 190. The protrusions 174 of the rack shaft 170 are fitted into the windows 197 formed in the plate parts 196 of the guide nozzle 190, and therefore the rack shaft 170 and the guide nozzle 190 are fixed to each other.

Further, the main body part 195 of the tubular part 191 of the guide nozzle 190 has a tapered portion 195b having a larger inner diameter at a central portion thereof. The first coil spring 180 is interposed (disposed) between the tapered portion 195b and the front surface of the housing 20. The first coil spring 180 biases the guide nozzle 190 in a direction (the +Y direction in the figure) away from the tool main body 10.

Next, the configuration of the guide cap 200 of the cleaning tool 1 in the present embodiment will be described in detail with reference to FIG. 5(a) to FIG. 5(c). FIG. 5(a) to FIG. 5(c) are a cross-sectional view, a front view, and a rear view showing the guide cap 200 in the present embodiment, and FIG. 5(a) is a cross-sectional view taken along the line VA-VA in FIG. 5(b) and FIG. 5(c).

As shown in FIG. 5(a) to FIG. 5(c), the guide cap 200 is a tubular member having a through hole 201. The through hole 201 extends along the axial direction of the guide cap 200 (the longitudinal direction of the guide cap 200) (the Y-axis direction in the figure) and has openings 202 and 203 at both ends. The opening 202 corresponds to an example of the "first opening" in the aspect of the present invention, and the opening 203 corresponds to an example of the "second opening" in the aspect of the present invention.

One opening 202 of the through hole 201 opens to one end surface 204 (the end surface on the -Y direction side in the figure) of the guide cap 200. The front end portion of the extension member 100 described above is inserted into the opening 202. At this time, the step surface 191a of the guide nozzle 190 of the extension member 100 abuts against the end surface 204, therefore the insertion of the extension member 100 into the guide cap 200 is restricted, and the cleaning head 110 is positioned with respect to the guide cap 200 in the axial direction (the Y-axis direction in the figure) of the guide cap 200. The one end surface 204 corresponds to an example of the "first contact surface" in the aspect of the present invention.

Grooves 202a to 202d that open to one end surfaces 204 described above are formed on the inner surfaces of the upper, lower, left, and right sides of the through hole 201. The grooves 202a to 202d have shapes that correspond to the convex parts 193a to 193d of the guide nozzle 190 described above. When the front end part 192 of the guide nozzle 190 is inserted into the guide cap 200, the convex parts 193a to 193d of the guide nozzle 190 fit into the grooves 202a to 202d formed in the opening 202 of the guide cap 200, and the cleaning head 110 is positioned with respect to the guide cap 200 in a direction (the XZ plane direction in the figure) substantially perpendicular to the axial direction of the guide cap 200.

As described above, in the outer surface of the front end part 192 of the guide nozzle 190, the protruding amount of the convex part 193a on the left side (the +X direction side in the figure) in FIG. 4 is larger than the protruding amount of the convex part 193b on the right side (the -X direction side in the figure) in FIG. 4. In the inner surface of the through-hole 201 of the guide cap 200, the depth of the groove 202a on the upper side (the +X direction side in the figure) in FIG. 5(c) is deeper than the depth of the groove 202b on the lower side (-X direction side in the figure) in FIG. 5(c) so as to correspond to the shape of the protrusion 193a and 193b. Therefore, it is possible to limit the insertable orientation of the guide nozzle 190 into the guide cap 200 to a specific orientation.

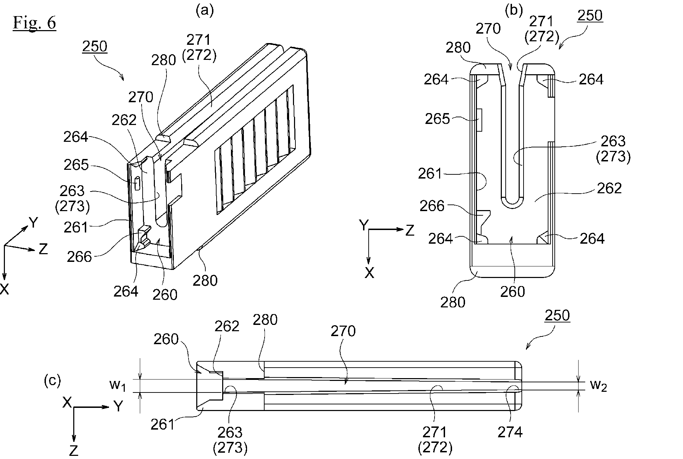

On the other hand, the other opening 203 of the through hole 201 opens to the other end surface 205 (the end surface on the +Y direction side in the figure) of the guide cap 200. The jig 250 to which the optical connector 300 is attached is inserted into the opening 203. At this time, the step surface 280 (see FIG. 6(a) to FIG. 6(c)) abuts against the end surface 205, therefore the insertion of the jig 250 into the guide cap 200 is restricted, and the optical connector 300 is positioned with respect to the guide cap 200 in the axial direction (the Y-axis direction in the figure) of the guide cap 200. The other end surface 204 corresponds to an example of the "second contact surface" in the aspect of the present invention.

Furthermore, a step surface 206 is formed in the through hole 201 of the guide cap 200. Here, when cleaning the connection end surface of the optical connector larger than the above-mentioned optical connector 300, the optical connector is inserted into the through-hole 201 without using the jig 250. At this time, for example, the housing of the optical connector abuts against the step surface 206, the insertion of the optical connector into the guide cap 200 is restricted, and the optical connector is positioned with respect to the guide cap 200 in the axial direction (the Y-axis direction in the figure) of the guide cap 200.

Although not particularly shown, the guide cap 200 may include a lid that closes the opening 203. When the optical connector is not cleaned, the front end portion of the extension member 100 is inserted into the guide cap 200, and the opening 203 is closed with the lid. Accordingly, it is possible to suppress intrusion of dirt, dust, moisture, and the like into the through-hole 201 of the guide cap 200. Although not particularly shown, the lid may be connected to the main body of the guide cap 200 via a hinge.

Next, the configuration of the jig 250 of the cleaning tool 1 in the present embodiment will be described in detail with reference to FIG. 6(a) to FIG. 6(c). FIG. 6(a) to FIG. 6(c) are a perspective view, a front view, and a plan view showing the jig 250 in the present embodiment.

The jig 250 is a member that is inserted into the through hole 201 of the guide cap 200 in a state where the optical connector 300 is attached to the jig 250. Although not particularly shown, the jig 250 may be connected to the guide cap 200 or the cleaning unit 3 with a string or the like to prevent the jig 250 from being lost. As shown in FIG. 6 (a) to FIG. 6 (c), the jig 250 includes an accommodating part 260 that is concave and that accommodates the housing 320 of the optical connector 300, and a groove 270 that accommodates the optical fiber 330 leading out from the optical connector 300.

The accommodating part 260 is disposed at one end (the -Y direction side in the figure) of the jig 250 and has a sidewall 261 surrounding the housing 320 of the optical connector 300. A cutout 263 that opens toward the -X direction in the figure is formed in the bottom surface 262 of the accommodating part 260. When the housing 320 of the optical connector 300 is accommodated in the accommodating part 260, the housing 320 abuts against the bottom surface 262 of the accommodating part 260, and therefore the optical connector 300 is positioned with respect to the jig 250 in the axial direction (the Y axis direction in the figure) of the jig 250. At this time, the optical fiber 330 leading out from the housing 320 passes through the cutout 263. The bottom surface 262 corresponds to an example of the "fifth contact surface" in the aspect of the present invention.

Tapered parts 264 are disposed at each of the four corners of the accommodating part 260. The four tapered parts 264 have inclined surfaces that approach each other as the tapered parts 264 approach the bottom surface 262 of the accommodating part 260. When the housing 320 of the optical connector 300 is accommodated in the accommodating part 260, the four tapered parts 264 guide the housing 320 within the accommodating part 260, and therefore the housing 320 is positioned with respect to the jig 250 in a direction (XZ plane direction in the figure) substantially perpendicular to the axial direction of the jig 250.

Convex parts 265 and 266 are disposed within the accommodating part 260. The convex part 265 corresponds to an example of the "first convex part" in the aspect of the present invention, and the convex part 266 corresponds to an example of the "second convex part" in the aspect of the present invention.

The convex part 265 is disposed on the sidewall 261 to protrude toward the inside of the accommodating part 260 (the +Z direction in the figure) in order to prevent the optical connector 300 from falling off from the jig 250. When the housing 320 of the optical connector 300 is accommodated in the accommodating part 260, the convex part 265 is inserted into the above-mentioned recess part 321 of the housing 320.

On the other hand, the convex part 266 is disposed on the bottom surface 262 of the accommodating part 260 in order to prevent erroneous attachment of the optical connector 300 to the jig 250. When the housing 320 of the optical connector 300 is accommodated in the accommodating part 260, the convex part 266 is inserted into the above-mentioned recess part 322 of the housing 320.

The groove 270 extends along the longitudinal direction (Y-axis direction in the figure) of the jig 250 and penetrates the jig 250. The groove 270 has an opening 271 that opens to one side surface of the jig 250, and the optical fiber 330 can be inserted and removed from the groove 270 through the opening 271 in a direction (X-axis direction in the figure) substantially perpendicular to the longitudinal direction of the jig 250. The opening 271 has tapered surfaces 272 so that the opening 271 tapers as that the opening 271 approaches the bottom surface of the groove 270, and the optical fiber 330 can be easily inserted and removed from the groove 270. The opening 271 corresponds to an example of the "third opening" in the aspect of the present invention.

One end 273 (the -Y direction side in the figure) of the groove 270 communicates with the above-mentioned cutout 263 in the bottom surface 262 of the accommodating part 260. Further, the other end 274 (the +Y direction side in the figure) of the groove 270 is open to the other end surface (the +Y direction side in the figure) of the jig 250. In the embodiment, the width of the groove 270 tapers from one end 273 to the other end 274, and the width $w_2$ of the end 274 is narrower than the width $w_1$ of the end 273 in the groove 270 ($w_2 < w_1$). Therefore, when the housing 320 of the optical connector 300 is accommodated in the accommodating part 260, the optical fiber 330 is relatively free with respect to the jig 250 at one end 273, and it is possible to allow the housing 320 to move in a direction (XZ plane direction in the figure) perpendicular to the axial direction of the jig 250. On the other hand, the optical fiber 330 can be held by the jig 250 at the other end 274, and it is possible to suppress the movement of the housing 320 in the axial direction (Y-axis direction in the figure) of the jig 250.

The jig 250 also has a step surface 280. The step surface 280 is formed on the side surface of the jig 250 (a surface parallel to the YZ plane in the figure). When the jig 250 to which the optical connector 300 is attached is inserted into the guide cap 200, the step surface 280 abuts against the end surface 205 of the guide cap 200, and therefore the optical connector 300 is positioned with respect to the guide cap 200 in the axial direction (the Y-axis direction in the figure) of the guide cap 200. The step surface 280 corresponds to an example of the "second contact surface" in the aspect of the present invention.

When the jig 250 to which the optical connector 300 is attached is inserted into the guide cap 200, the top and bottom surfaces and the left and right side surfaces of the jig 250 come into contact with the inner surface of the guide cap 200, and therefore the optical connector 300 is positioned with respect to the guide cap 200 in a direction (the XZ plane direction in the figure) substantially perpendicular to the axial direction of the guide cap 200.

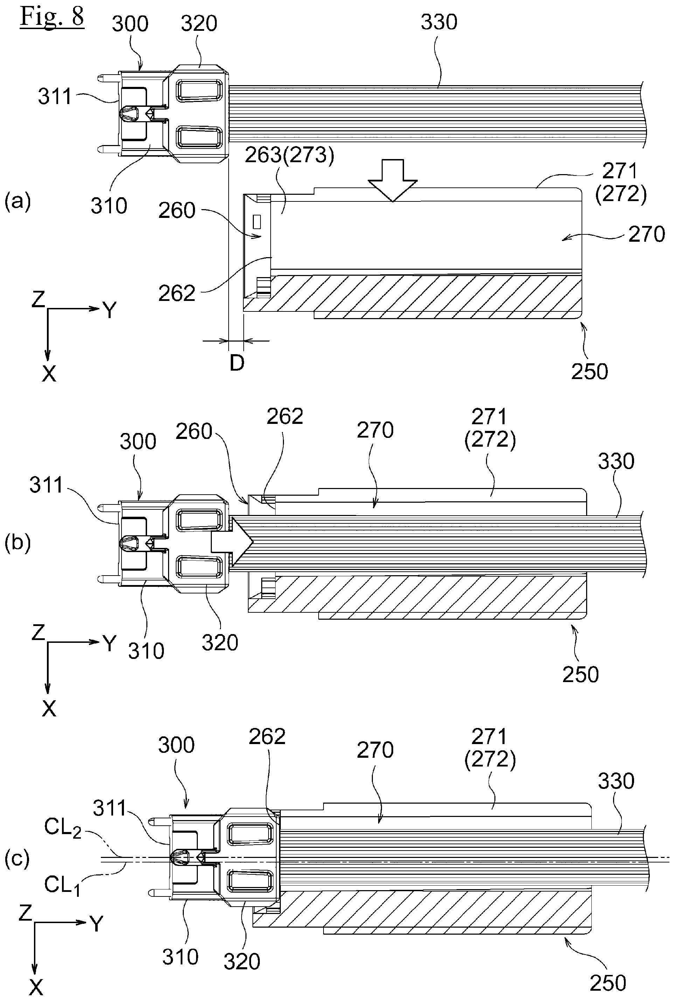

Here, in the present embodiment, when the optical connector 300 is attached to the jig 250, the central axis $CL_1$ of the jig 250 is misaligned with the central axis $CL_2$ of the optical connector 300 (see FIG. 8(c)). When the jig 250 is inserted into the guide cap 200 in the wrong orientation, the optical connector 300 comes into contact with the above-mentioned step surface 206 in the guide cap 200. Therefore, the orientation in which the jig 250 can be inserted into the guide cap 200 is limited to a specific orientation. As with the above-mentioned positioning of the guide nozzle 190 and the guide cap 200, the orientation in which the jig 250 can be inserted into the guide cap 200 may be limited to a specific direction by the outer shape of the jig 250 and the shape of the opening 203 of the guide cap 200.

**In** the present embodiment, the above- mentioned guide cap 200 and jig 250 are configured to satisfy the following formulas (4) and (5).

$$P_{min} \times A/K - C_0 \leqq C_1 \leqq P_{max} \times A/K - C_0 \ldots (4)$$

$$C_1 = L_0 - L_1 \ldots (5)$$

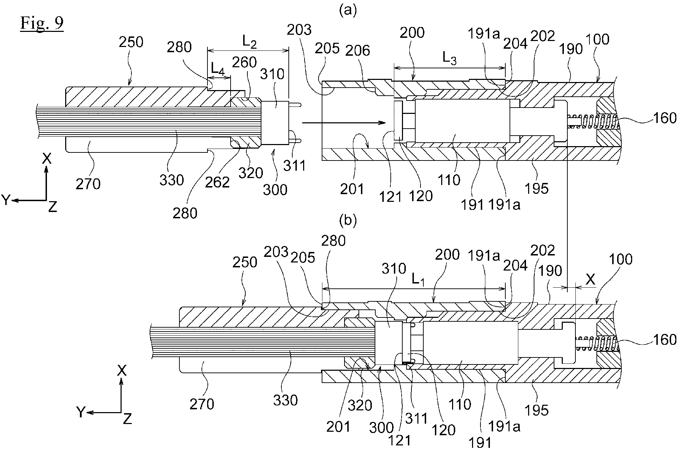

In the formulas (4) and (5), $P_{min}$ is a minimum value of a surface pressure of the cleaning head 110 against the connection end surface 311 of the optical connector 300, $P_{max}$ is a maximum value of a surface pressure of the cleaning head 110 against the connection end surface 311 of the optical connector 300, A is an effective area of a cleaning target portion in the connection end surface 311 of the optical connector 300, K is a spring constant of the second coil spring 160, $C_0$ is a compression amount of the second coil spring 160 in a non-pressing state of the cleaning head 110, $L_0$ (not shown) is a sum of the distance $L_2$ from the step surface 280 of the jig 250 to the connection end surface 311 of the optical connector 300 and the distance $L_3$ from the step surface 191a of the guide nozzle 190 to the pressing surface 121 of the cleaning head 110 in the non-pressing state of the cleaning head 110, and $L_1$ is the entire length of the guide cap 200 (see FIG. 9(a) and FIG. 9(b) described later).

The "non-pressing state of the cleaning head 110" means a state in which the cleaning head 110 does not press the cleaning element 2 against the connection end surface 311 of the optical connector 300. The "surface pressure" means a magnitude of a force per unit area (a pressure) acting on an object.

Although not particularly limited, in order to satisfy the above formulas (4) and (5), for example, the distance $L_4$ between the step surface 280 and the bottom surface 262 in the jig 250 is adjusted (see FIG. 9(a) described later). The above-mentioned guide cap 200 and jig 250 are configured to satisfy the following formulas (4) and (5), and therefore the cleaning element 2 can be pressed against the connection end surface 311 of the optical connector 300 with an appropriate surface pressure. If the surface pressure is weak, the connection end surface 311 may not be sufficiently cleaned, and dirt or the like may remain on the connection end surface 311. On the other hand, if the surface pressure is strong, the cleaning element 2 may not moves between the pressing surface 121 of the cleaning head 110 and the connection end surface 311.

It is preferable that the above-mentioned guide cap 200 and jig 250 are configured to satisfy the following formula (6), and it is more preferable that they are configured to satisfy the following formula (7).

$$0.6 \text{ mm} \leq C_1 \leq 2.3 \text{ mm} \ldots (6)$$

$$1.1 \text{ mm} \leq C_1 \leq 1.7 \text{ mm} \ldots (7)$$

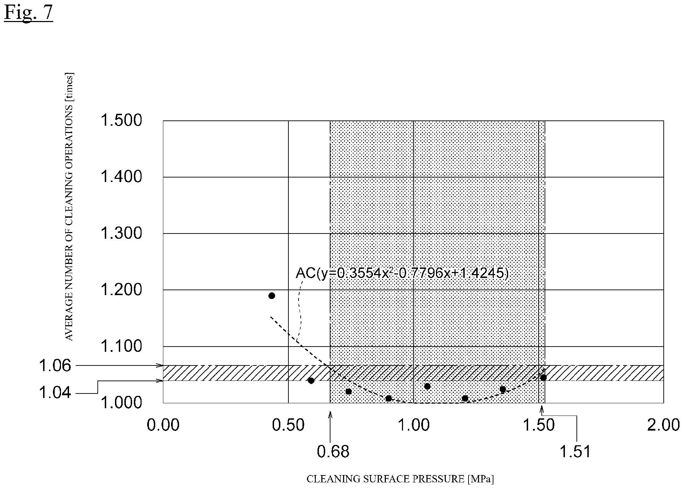

Here, FIG. 7 is a graph showing the experimentally obtained relationship between the appropriate surface pressure and the average number of cleaning operations in a conventional optical connector cleaning tool used to clean an MPO connector. The "average number of cleaning operations" is the number of times required to clean the connection end surface of the optical connector, and specifically, the number of times that the tool main body is pushed into the extension member. The "average number of cleaning operations" is a value obtained by counting the number of times until the end surface of the optical fiber is visually confirmed to be clean for all the optical fibers held in the ferrule of the optical connector and then calculating the average.

On the basis of the approximate curve AC obtained from the above graph and the fact that the actual value of the average number of cleaning operations of the mass-produced conventional optical connector cleaning tool is 1.04 to 1.06 times, 0.68 to 1.51MPa can be obtained as the range of the surface pressure appropriate for cleaning. Then, the above formula (6) can be obtained by substituting 0.68MPa for $P_{min}$ and 1.51MPa for $P_{max}$ in the above formula (4). Although not particularly limited, in this case, A is 5.94 mm², K is 2.789 N/mm, and $C_1$ is 0.9 mm.

Next, an example of the method of using the optical connector cleaning tool 1 described above will be described with reference to FIG. 8(a) and FIG. 10(b).

FIG. 8(a) to FIG. 10(b) are diagrams for explaining the cleaning method using the optical connector cleaning tool 1 in the present embodiment. FIG. 8(a) is a diagram showing the state before the optical connector 300 is attached to the jig 250, FIG. 8(b) is a diagram showing the state in the middle of attaching the optical connector 300 to the jig 250, and FIG. 8(c) is a diagram showing the state after the optical connector 300 is attached to the jig 250. FIG. 9(a) is a diagram showing the state in which the jig 250 to which the optical connector 300 is attached is inserted into the guide cap 200, and FIG. 9(b) is a diagram showing the state in which the cleaning head 110 presses the cleaning element 2 against the optical connector 300. FIG. 10(a) is a view showing a state in which the tool main body 10 is moved toward the extension member 100, and FIG. 10(b) is a view showing a state in which the tool main body 10 is moved backward from the extension member 100.

First, as shown in FIG 8(a) and FIG. 8(b), the operator inserts the optical fiber 330 protruding from the housing 320 of the optical connector 300 into the groove 270 of the jig 250. At this time, the operator moves the optical connector 300 in the +X direction in the figure while maintaining the distance D between the housing 320 and the front end of the jig 250 in the Y-axis direction in the figure and inserts the optical fiber 330 into the groove 270 through the opening 271.

Next, as shown in FIG. 8(b) and FIG. 8(c), the operator pulls the optical fiber 330 in the +Y direction in the figure, and the housing 320 of the optical connector 300 is accommodated in the accommodating part 260 of the jig 250. At this time, the housing 320 of the optical connector 300 moves in the +Y axis direction in the figure while being guided by the tapered parts 264 and then abuts against the bottom surface 262 of the accommodating part 260, and therefore the housing 320 is positioned with respect to the jig 250. In addition, the convex part 265 is inserted into the recess part 321 of the housing 320, and therefore the optical connector 300 is prevented from falling off the jig 250. In addition, the convex part 266 is inserted into the recess part 322 of the housing 320, and therefore the optical connector 300 is prevented from being erroneously attached to the jig 250.

Next, as shown in FIG. 9(a) and FIG. 9(b), the operator inserts the jig 250 to which the optical connector 300 is attached into the through hole 201 of the guide cap 200. At this time, the step surface 280 of the jig 250 abuts against the end surface 205 of the guide cap 200, and therefore the cleaning head 110 disposed in the guide cap 200 presses the cleaning element 2 against the connection end surface 311 of the optical connector 300 by an appropriate surface pressure. In this state, the optical connector 300 is not in contact with the inner surface of the guide cap 200 and is sandwiched between the cleaning head 110 and the jig 250.

The extension member 100 is inserted into the guide cap 200 in advance. When the extension member 100 is inserted, the operator abuts the step surface 191a of the guide nozzle 190 against the end surface 204 of the guide cap 200. The extension member 100 may be inserted into the guide cap 200 after the jig 250 is inserted into the guide cap 200.

Next, when the operator pushes the tool main body 10 with respect to the extension member 100, as shown in FIG. 10(a), the first coil spring 180 is compressed, and the distance between the roll 177 of the extension member 100 and the roll 53 of the tool main body 10 increases by a predetermined length $L_5$.

Therefore, the length of the cleaning element 2 existing between the supply-side guide cylinder 51 and the roll 177 is shortened by the predetermined length $L_5$, while the length of the cleaning element 2 existing between the rolls 177 and 53 is lengthened by the predetermined length $L_5$. As a result, the cleaning element 2 on the pressing surface 121 is pulled toward the winding bobbin 40 side (collection side), and the cleaning element 2 slides while being pressed against the end surface 311 of the ferrule 310 to wipe off the dirt adhering to the end surface 311.

As shown in FIG. 10(a), the rack gear 176 rotates the pinion gear 71 by pushing the tool main body 10 by the operator. However, since the rotation of the winding bobbin 40 in the direction (clockwise in FIG. 10(a)) opposite to the winding direction (counterclockwise in FIG. 10(a)) is prohibited by the ratchet pawl 60, a slip occurs between the leaf spring portion 72 of the transmission member 70 and the friction surface of the inner ring portion 42. Therefore, in this case, the transmission member 70 idles and the winding bobbin 40 does not rotate.

Next, when the operator releases the pushing of the tool main body 10 with respect to the extension member 100, as shown in FIG. 10(b), the tool main body 10 is moved backward with respect to the extension member 100 by the elastic force of the first coil spring 180, the distance between the roll 177 of the extension member 100 and the roll 53 of the tool main body 10 is shortened by the predetermined length $L_5$, and the rack gear 176 rotates the pinion gear 71 at the same time. The rotational force of the pinion gear 71 is transmitted to the winding bobbin 40 via the leaf spring portion 72 of the transmission member 70 and the friction surface of the inner ring portion 42, the winding bobbin 40 rotates, and the used cleaning element 2 is wound around the winding bobbin 40.

Accordingly, the driving mechanism that rotationally drives the winding bobbin 40 in accordance with the relative movement of the extension member 100 with respect to the tool body 10 includes the above-mentioned rack and pinion mechanism including the rack gear 176 and the pinion gear 71, and the above-mentioned friction transmission mechanism including the leaf spring portion 72 and the friction surface 421.

At the same time, the length of the cleaning element 2 existing between the supply-side guide cylinder 51 and the roll 177 is lengthened by a predetermined length $L_5$. At this time, since the distance between the pressing surface 121 of the cleaning head 110 and the roll 177 is constant and the cleaning element 2 is hung around the pressing surface 121 of the cleaning head 110, the unused cleaning element 2 having a length corresponding to the predetermined length $L_5$ is sent out from the feeding bobbin 30.

When the cleaning is finished, the operator pulls out the jig 250 from the guide cap 200. Then, the optical connector 300 is removed from the jig 250 in a reverse order to that of FIG. 8(a) to FIG. 8(c) described above.

As described above, in the present embodiment, the optical connector cleaning tool 1 includes the jig 250 to which the optical connector 300 is detachably attached, the cleaning head 110 is inserted into the through hole 201 of the guide cap 200 through one opening 202, and the jig 250 is inserted into the through hole 201 of the guide cap 200 through the other opening 203. Therefore, regardless of how the operator holds the jig 250, it is possible to appropriately press against the connection end surface of the optical connector, and it is possible to stabilize the cleaning quality.

In the embodiment, even if the optical connector 300 is small and is smaller than the inner diameter of the through hole 201 of the guide cap 200, since the optical connector 300 can be inserted into the guide cap 200 using the jig 250, it is possible to cope with a plurality of types of optical connectors of different sizes with one guide cap 200.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

For example, as disclosed in FIG. 12(a) to FIG. 12(c) of JP 2014-35489A, it is not necessary to provide the roll 153 and 177 for supplying the cleaning element 2 of a predetermined length $L_5$. In this case, the winding direction of the winding bobbin 40 is opposite to the above embodiment, and the ratchet mechanism including the ratchet pawl 60 and the ratchet gear 411 is also disposed in the opposite direction to the above embodiment.

An elastic body other than a spring, such as rubber, may be used instead of the second coil spring 160 described above. Also in this case, the spring constant (k) of the elastic body can be calculated by dividing the load (F) applied to the elastic body by the displacement amount (x) of the elastic body based on Hooke's law (k=F/x).

Although the optical connector cleaning tool for cleaning the connection end surface of a multi-fiber collective connection type optical connector is described, the present invention may be applied to an optical connector cleaning tool for cleaning the connection end surface of the single-fiber connection type optical connector. As the cleaning tools for single-fiber connection type optical connectors, those described in JP 2010-191465 A, JP 2010-266675 A, JP 2011-33736 A, JP 2011-75585 A, JP 2011-137872 A, and JP 2011-150083 A can be exemplified.

In this case, one in which a woven fabric that is made of ultrafine fibers such as polyester or nylon is processed into a thread shape can be used as the cleaning element. Alternatively, a narrow tape-like cleaning element may be used as the cleaning element.

Although not particularly limited, as the single-fiber connection type optical connector as a cleaning object, LC type optical connectors (trademarked by Lucent Co.), SC type optical connectors specified in JIS C5973, MU type optical connectors specified in JIS C5983, SC2 type optical connectors, etc. can be exemplified.

[EXPLANATIONS OF LETTERS OR NUMERALS]

| | |
|---|---|
| 1 | Optical connector cleaning tool |
| 2 | Cleaning element |
| 3 | Cleaning unit |
| 10 | Tool main body |
| 30 | Feeding bobbin |
| 40 | Winding bobbin |
| 100 | Extension member |
| 105 | Cleaning shaft |
| 110 | Cleaning head |
| 121 | Pressing surface |
| 160 | Second coil spring |
| 170 | Rack shaft |
| 190 | Guide nozzle |
| 191 | Tubular part |
| 191a | Step surface |
| 192 | Front end part |
| 193a to 193d | Convex part |
| 200 | Guide cap |
| 201 | Through hole |
| 202 | Opening |
| 202a to 202d | Groove |
| 203 | Opening |
| 204 | End surface |
| 205 | End surface |
| 260 | Jig |
| 261 | Sidewall |
| 262 | Bottom surface |
| 263 | Cutout |
| 264 | Tapered part |
| 265 | Convex Part |
| 266 | Convex part |
| 270 | Groove |
| 271 | Opening |

| 272 | Tapered surface |
| 273 and 274 | End |
| 280 | Step surface |
| 300 | Optical connector |
| 310 | Ferrule |
| 311 | Connection end surface |
| 320 | Housing |
| 321 | Recess part |
| 322 | Recess part |
| 330 | Optical fiber |

## Claims

1. An optical connector cleaning tool that comprises a cleaning element cleaning a connection end surface of an optical connector, the optical connector cleaning tool comprising:

   a guide cap that comprises a through hole having a first opening and a second opening;
   a cleaning head that comprises a pressing surface pressing the cleaning element against the connection end surface and that is inserted into the through hole though the first opening; and
   a jig to which the optical connector is detachably attached and that is inserted into the through hole through the second opening.

2. The optical connector cleaning tool according to claim 1, comprising:

   a cleaning shaft that comprises the cleaning head; and
   a tubular member that accommodates the cleaning shaft so that the cleaning head protrudes, wherein
   the cleaning shaft comprises:

   a support member that movably supports the cleaning head; and
   a biasing member that is interposed between the cleaning head and the support member and that biases the cleaning head away from the support member,

   the jig has a second contact surface that contacts a first contact surface of the guide cap in a first direction that is the axial direction of the guide cap,
   the tubular member has a fourth contact surface that contacts a third contact surface in the first direction, and following formulas (1) and (2) are satisfied,

   $$P_{min} \times A/K - C_0 \leqq C_1 \leqq P_{max} \times A/K - C_0 \ \dots \ (1)$$

   $$C_1 = L_0 - L_1 \ \dots \ (2)$$

   wherein, in the formulas (1) and (2),
   $P_{min}$ is a minimum value of a surface pressure of the cleaning head against the connection end surface,
   $P_{max}$ is a maximum value of a surface pressure of the cleaning head against the connection end surface,
   A is an area of a cleaning target portion in the connection end surface,
   K is a spring constant of the biasing member,
   $C_0$ is a compression amount of the biasing member in a non-pressing state of the cleaning head,
   $L_0$ is a sum of a distance from the second contact surface to the connection end surface and a distance from the fourth contact surface to the pressing surface in the non-pressing state of the cleaning head, and
   $L_1$ is a distance between the first contact surface and the third contact surface in the guide cap.

3. The optical connector cleaning tool according to claim 2, wherein
   a following formula (3) is satisfied.

   $$0.6 \ \text{mm} \leq C_1 \leq 2.3 \ \text{mm} \ \dots \ (3)$$

4. The optical connector cleaning tool according to any one of claims 1 to 3, wherein

the jig has a fifth contact surface that contacts against the optical connector in a second direction that is the axial direction of the jig, and

the fifth contact surface has a cutout through which an optical fiber protruding from the optical connector passes.

5. The optical connector cleaning tool according to claim 4, wherein

the jig comprises a groove that accommodates an optical fiber protruding from the optical connector,

the groove communicates with the cutout and extends along the second direction, and

the groove has a third opening through which the optical fiber is inserted and removed from the groove in a third direction substantially perpendicular to the second direction.

6. The optical connector cleaning tool according to claim 5, wherein the third opening has a tapered surface so that the third opening tapers as the third opening approaches a bottom surface of the groove.

7. The optical connector cleaning tool according to claim 5 or 6, wherein the groove has a portion having a width narrower than a width of the cutout.

8. The optical connector cleaning tool according to any one of claims 4 to 7, wherein

the jig comprises:

an accommodating part that is concave and that accommodates the optical connector; and

a tapered part that is disposed in the accommodating part and that guides and positions the optical connector in the accommodating part, and

a bottom surface of the accommodating part is the fifth contact surface.

9. The optical connector cleaning tool according to any one of claims 4 to 8, wherein

the jig comprises:

an accommodating part that is concave and that accommodates the optical connector; and

a first convex part that protrudes from a sidewall of the accommodating part and that is inserted into a first recess part of the optical connector, and

a bottom surface of the accommodating part is the fifth contact surface.

10. The optical connector cleaning tool according to any one of claims 4 to 9, wherein

the jig comprises:

an accommodating part that is concave and that accommodates the optical connector; and

a second convex part that is disposed in the accommodating part and that is inserted into a second recess part of the optical connector,

a bottom surface of the accommodating part is the fifth contact surface, and no recess part into which the second convex part is inserted is formed at a position point-symmetrical to the second recess part in the optical connector.

11. The optical connector cleaning tool according to any one of claims 1 to 10, comprising:

a cleaning shaft that comprises the cleaning head and that holds a cleaning element so that the cleaning element is turned back at the pressing surface;

a tubular member that accommodates the cleaning shaft so that the cleaning head protrudes;

a feeding bobbin that feeds the cleaning element to the pressing surface;

a winding bobbin that collects the cleaning element from the pressing surface;

a housing from which the cleaning shaft protrudes and that accommodates the feeding bobbin and the winding bobbin; and
a driving mechanism that rotates the winding bobbin in accordance with the relative movement of the cleaning shaft with respect to the housing to wind the cleaning element around the winding bobbin, wherein
the cleaning shaft is movable together with the tubular member with respect to the housing.

Fig. 1

(a)

(b)

Fig. 2

Fig. 3

Fig. 4

Fig. 5

(a)

Fig. 6

(a)

(b)

(c)

Fig. 7

Fig. 8

Fig. 9

(a)

(b)

Fig. 10

(a)

(b)

## INTERNATIONAL SEARCH REPORT

| International application No. |
| --- |
| **PCT/JP2023/033541** |

**A. CLASSIFICATION OF SUBJECT MATTER**

*G02B 6/36*(2006.01)i; *B08B 1/00*(2024.01)i
FI: G02B6/36; B08B1/00

According to International Patent Classification (IPC) or to both national classification and IPC

**B. FIELDS SEARCHED**

Minimum documentation searched (classification system followed by classification symbols)

G02B6/24; G02B6/255; G02B6/36-6/40; B08B1/00-1/04; B08B5/00-13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-004063 A (FUJIKURA LTD) 12 January 2016 (2016-01-12) paragraphs [0019]-[0061], fig. 1-6 | 1-4, 8-11 |
| Y | | 5-11 |
| Y | JP 02-264907 A (NIPPON TELEGR & TELEPH CORP <NTT>) 29 October 1990 (1990-10-29) p. 4, lower right column, line 12 to p. 5, lower left column, line 6, fig. 4-6 | 5-11 |
| Y | JP 2011-158679 A (BROTHER INDUSTRIES LTD) 18 August 2011 (2011-08-18) paragraphs [0075]-[0087], fig. 12-14 | 5-11 |
| A | JP 2007-003901 A (FUJIKURA LTD) 11 January 2007 (2007-01-11) paragraph [0095], fig. 1-20 | 1-11 |
| A | US 2003/0221710 A1 (YOUNG) 04 December 2003 (2003-12-04) entire text, all drawings | 1-11 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/033541**

| Patent document cited in search report | | | Publication date (day/month/year) | Patent family member(s) | | | Publication date (day/month/year) |
|---|---|---|---|---|---|---|---|
| JP | 2016-004063 | A | 12 January 2016 | US paragraphs [0031]-[0078], fig. 1-6 | 2015/0362680 | A1 | |
| JP | 02-264907 | A | 29 October 1990 | US column 8, line 10 to column 9, line 8, fig. 8-9 EP | 5117528 391111 | A A1 | |
| JP | 2011-158679 | A | 18 August 2011 | US paragraphs [0098]-[0110], fig. 12-14 EP | 2011/0188000 2352048 | A1 A2 | |
| JP | 2007-003901 | A | 11 January 2007 | (Family: none) | | | |
| US | 2003/0221710 | A1 | 04 December 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022194259 A
- WO 2014141405 A
- JP 2014035489 A
- JP 2014035490 A
- JP 2014035491 A
- JP 2010191465 A
- JP 2010266675 A
- JP 2011033736 A
- JP 2011075585 A
- JP 2011137872 A
- JP 2011150083 A